(19) Europäisches Patentamt
European Patent Office
Office européen des brevets

(11) **EP 1 843 454 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
***H02K 51/00*** *(2006.01)*

(21) Anmeldenummer: **07006645.1**

(22) Anmeldetag: **30.03.2007**

(54) **Getriebeeinheit und Werkzeughalter mit einer derartigen Getriebeeinheit**

Drive unit and tool holder with such a drive unit

Unité d'engrenage et support d'outil doté d'une telle unité d'engrenage

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.04.2006 DE 102006016044**

(43) Veröffentlichungstag der Anmeldung:
**10.10.2007 Patentblatt 2007/41**

(73) Patentinhaber: **Index-Werke GmbH & Co. KG Hahn & Tessky**
**73730 Esslingen (DE)**

(72) Erfinder:
• **Hafla, Dietmar Franz**
**73666 Baltmannsweiler (DE)**
• **Engel, Dirk**
**24111 Kiel (DE)**
• **Klotz, Benjamin**
**73732 Esslingen (DE)**

(74) Vertreter: **Hoeger, Stellrecht & Partner Patentanwälte**
**Uhlandstrasse 14c**
**70182 Stuttgart (DE)**

(56) Entgegenhaltungen:
**EP-A- 0 798 844       DE-A1- 10 125 464**
**DE-A1- 19 824 676    DE-A1- 19 915 301**
**DE-C1- 4 408 719**

• **INGELHEIM VON P G ET AL: "ELEKTRISCHE PLANETENGETRIEBE: REVOLUTION FUER DEN ANTRIEBSSTRANG ODER NISCHENPRODUKT?" ANTRIEBSTECHNIK, VEREINIGTE FACHVERLAGE, MAINZ, DE, Bd. 40, Nr. SPII, November 2001 (2001-11), Seiten 84-86,88, XP001111252 ISSN: 0722-8546**
• **NORDLUND E ET AL: "The four-quadrant energy transducer" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, Bd. 1 OF 4. CONF. 37, 13. Oktober 2002 (2002-10-13), Seiten 390-397, XP010610251 ISBN: 0-7803-7420-7**

**Beschreibung**

Die Erfindung betrifft eine Getriebeeinheit, umfassend einen äußeren Polträger mit einer Anzahl von in gleichem radialem Abstand und in Winkelabständen voneinander um eine Drehachse angeordneten äußeren Polen, einen inneren Polträger mit einer Anzahl von in gleichem radialem Abstand und in Winkelabständen voneinander um die Drehachse angeordneten inneren Polen und einen intermediären Polträger mit zwischen den äußeren Polen und den inneren Polen in gleichem radialem Abstand und in Winkelabständen voneinander um die Drehachse angeordneten intermediären Polen, wobei einer der Polträger stationär angeordnet ist, einer der Polträger mit einem Antriebselement gekoppelt und um die Drehachse relativ zum stationären Polträger drehbar ist und einer der Polträger mit einem Abtriebselement gekoppelt und um die Drehachse relativ zum stationären Polträger drehbar ist.

Eine derartige Getriebeeinheit ist beispielsweise aus der DE 101 25 464 bekannt, wobei die intermediären Pole durch magnetische Induktion und dadurch bestromte Spulen ein Magnetfeld erzeugen, welches mit den äußeren Polen und den inneren Polen in Wechselwirkung tritt.

Der Erfindung liegt die Aufgabe zugrunde, eine derartige Getriebeeinheit einfacher, robuster und kompakter auszuführen.

Diese Aufgabe wird daher bei einer Getriebeeinheit der eingangs beschriebenen Art erfindungsgemäß dadurch gelöst, dass jeder der intermediären Pole einen sich zwischen einem dem äußeren Polträger zugewandten außenliegenden Polkopf und einem dem inneren Polträger zugewandten innenliegenden Polkopf erstreckenden Polkörper aus magnetisierbarem Material aufweist und dass das magnetisierbare Material der intermediären Pole durch permanent magnetisierte Pole von mindestens einem der äußeren und inneren Polträger magnetisierbar ist.

Der Vorteil der erfindungsgemäßen Lösung ist darin zu sehen, dass damit der intermediäre Polträger einfacher ausgebildet und aufgebaut ist und insbesondere im intermediären Polträger die mit elektrischen Leitungen und mit Spulen verbundenen Verluste und Begrenzungen vermieden werden können.

Durch die vereinfachte Ausführung des intermediären Polträgers wird das erfindungsgemäße Getriebe darüber hinaus äußerst kompakt und einfach aufgebaut.

Ein weiterer Vorteil des erfindungsgemäßen Getriebes ist der, dass dieses eine verschleißfreie Kraftübertragung ermöglicht und außerdem bei Überschreiten eines Nenndrehmoments eine beschädigungsfreie Unterbrechung der Kraftübertragung erlaubt, wobei die Kraftübertragung unmittelbar nach Unterschreiten des Nenndrehmoments wieder einsetzt.

Um bei der erfindungsgemäßen Getriebeeinheit einen eindeutigen und störungsfreien Lauf zu gewährleisten ist vorzugsweise vorgesehen, dass die intermediären Pole das Magnetfeld der permanent magnetisierten Pole des mindestens einen der äußeren und inneren Polträger in ein Magnetfeld transferieren, in dem die Pole des anderen der äußeren und inneren Polträger eindeutig ausrichtbar sind. Der Vorteil dieser Lösung ist darin zu sehen, dass damit eine eindeutige Drehrichtung und ein eindeutiges Drehverhalten des mit dem Antriebselement gekoppelten Polträgers vorgebbar ist.

Die Polträger der intermediären Pole können prinzipiell auf dem intermediären Polträger sitzen. Aus Gründen einer möglichst kompakten Bauweise ist es jedoch günstig, wenn die Polkörper der intermediären Pole in dem intermediären Polträger sitzen.

Um eine stabile, insbesondere auch für hohe Drehzahlen geeignete Lösung zu erhalten, ist vorzugsweise vorgesehen, dass die im intermediären Polträger sitzenden Polkörper durch eine den intermediären Polträger radial außenliegend umschließende Stützstruktur gesichert sind.

Eine derartige Stützstruktur verhindert, dass sich die Polkörper aus dem intermediären Polträger bei hohen Drehzahlen lösen.

Eine derartige Stützstruktur kann prinzipiell beliebig ausgebildet sein. Eine konstruktiv besonders günstige Lösung sieht dabei vor, dass die Stützstruktur eine Stützbandage mit umlaufend gewickelten Stützfasern ist. Eine derartige Lösung hat den Vorteil, dass die Stützbandage mit geringer radialer Dicke ausgeführt werden kann und dennoch die erforderliche Stabilität liefert.

Hinsichtlich der Ausbildung der Polkörper selbst wurden bislang keine näheren Angaben gemacht. So sieht eine vorteilhafte Lösung vor, dass die Polkörper der intermediären Pole aus einem zusammenhängenden magnetisierbaren Körper hergestellt sind.

In diesem Fall wären die Polkörper aus einem magnetisierbaren Vollmaterial hergestellt. Eine besonders vorteilhafte Lösung sieht vor, dass die Polkörper durch Blechpakte aus gestapelten Blechen hergestellt sind.

In diesem Fall sind die die einzelnen Blechpakete bildenden Bleche in gleicher Weise wie bei Anker- oder Statorblechen von Elektromotoren ebenfalls gegeneinander elektrisch isoliert.

Dabei verläuft vorzugsweise die Stapelrichtung der Bleche in den Blechpakten parallel zur Drehachse.

Hinsichtlich der weiteren Ausbildung der intermediären Pole, insbesondere im Hinblick auf deren Ausdehnung in Umlaufrichtung oder Azimutalrichtung wurden bislang keine näheren Angaben gemacht. Beispielsweise könnten die Polkörper einen doppel-T-förmigen Querschnitt aufweisen.

Eine besonders günstige Lösung sieht vor, dass die außenliegenden Polköpfe der intermediären Pole in Umlaufrichtung eine Winkelausdehnung um die Drehachse aufweisen, welche sich von einer Winkelausdehnung der innenliegenden Polköpfe der intermediären Pole unterscheidet. Damit lassen sich in einfacher Weise Optimierungen hinsichtlich einer optimierten Feldverteilung erreichen.

Eine besonders günstige Lösung sieht dabei vor, dass die außenliegenden Polköpfe eine geringere Ausdehnung in Umlaufrichtung aufweisen als die innenliegenden Polköpfe der intermediären Pole.

Hinsichtlich des konkreten Aufbaus des intermediären Polträgers wurden im Zusammenhang mit den bisherigen Ausführungen keine näheren Angaben gemacht. So sieht eine besonders vorteilhafte Lösung vor, dass die Polkörper des intermediären Polträgers als Segmente in eine Einbettmasse des intermediären Polträgers eingebettet sind. Damit lässt sich in einfacher Weise ein derartiger intermediärer Polträger mit größter Kompaktheit herstellen.

Um die Segmente relativ zueinander definiert zu positionieren und somit das Einbetten derselben in definierter Orientierung relativ zueinander zu erleichtern ist vorzugsweise vorgesehen, dass die Segmente durch Stützstege gegeneinander abgestützt sind.

Derartige Stützstege können beispielsweise separat eingesetzte Stützstege sein, die zwischen den Segmente wirksam sind. Eine besonders günstige Lösung sieht jedoch vor, dass die Stützstege Verbindungsstege zwischen den Blechen unterschiedlicher Segmente sind, das heißt, dass die Stützstege mindestens integraler Bestandteil von Blechen zweier oder mehrerer aufeinanderfolgender Segmente sind.

Besonders günstig ist es dabei, wenn die Stützstege mit Blechen aus allen Segmenten einen Ring bilden und somit jeweils nach einer bestimmten Anzahl von Blechen in jedem der Segmente ein derartiger Ring mit Verbindungsstegen eingesetzt ist.

Hinsichtlich der genaueren Ausbildung der äußeren und inneren Polträger wurden bislang keine näheren Angaben gemacht. So sieht eine vorteilhafte Ausführungsform vor, dass der äußere Polträger in einer Umlaufrichtung um die Drehachse abwechselnd magnetisierte und dem intermediären Polträger zugewandte äußere Polköpfe aufweist, die in geeigneter Weise mit den Polen des intermediären Polträgers zusammenwirken können.

Ferner sieht ein vorteilhaftes Ausführungsbeispiel vor, dass der innere Polträger in einer Umlaufrichtung um die Drehachse abwechselnd magnetisierte und dem intermediären Polträger zugewandte innere Polköpfe aufweist.

Dabei ist vorzugsweise vorgesehen, dass sich die Zahl der äußeren Polköpfe von der Zahl der inneren Polköpfe unterscheidet, insbesondere um ein Untersetzungs- oder Übersetzungsgetriebe zu erhalten.

Vorzugsweise ist dabei - insbesondere auch aus Gründen einer geeigneten kompakten Bauweise - die Zahl der äußeren Polköpfe größer als die Zahl der intermediären Pole.

Ferner ist es ebenfalls zweckmäßig, wenn die Zahl der inneren Polköpfe kleiner ist als die Zahl der intermediären Pole.

Ein geeignetes Zusammenwirken von äußerem Polträger, innerem Polträger und intermediärem Polträger lässt sich insbesondere dann sicherstellen, wenn der Betrag der Differenz zwischen der doppelten Zahl der intermediären Pole und der Anzahl der äußeren Polköpfe der Anzahl der inneren Polköpfe entspricht, so dass stets die Anzahl der äußeren Polköpfe und die Anzahl der inneren Polköpfe in definierter Relation zu der doppelten Zahl der intermediären Pole steht, um eine geeignete Feldverteilung für eine optimale Wechselwirkung der drei Polträger sicherzustellen.

Im Zusammenhang mit der dargestellten abwechselnden Magnetisierung der Polköpfe des äußeren und des inneren Polträgers wurde nicht näher darauf eingegangen, wie die Magnetisierung erfolgen soll. Insbesondere ist dabei die Möglichkeit offengelassen, dass die Magnetisierung der Polköpfe des äußeren Polträgers oder auch der Polköpfe des inneren Polträgers über geeignete Kurzschlusswicklungen erfolgt.

Die Ausbildung der permanent magnetisierten Pole wurde bislang nicht näher beschrieben.

Prinzipiell wäre es bei der erfindungsgemäßen Lösung denkbar, dass auch in einer Umlaufrichtung aufeinanderfolgende permanent magnetisierte Pole jeweils dieselbe magnetische Polarität aufweisen.

Ein hinsichtlich der Realisierung besonders günstiges Ausführungsbeispiel sieht jedoch vor, dass die permanent magnetisierten Pole dem intermediären Polträger zugewandte Polköpfe aufweisen, die in einer Umlaufrichtung um die Drehachse eine wechselnde magnetische Polarität aufweisen, das heißt, ihre Polarität ändern.

Prinzipiell könnte dabei die Magnetisierung der Pole dergestalt erfolgen, dass jeder Polkopf nicht nur eine einzige Polarität aufweist, sondern auch noch einen Anteil der anderen Polarität. Eine hinsichtlich eines optimalen Drehmoments zweckmäßige Lösung sieht jedoch vor, dass jeder Polkopf der permanent magnetisierten Pole eine einzige magnetische Polarität aufweist.

Im Zusammenhang mit der Beschreibung der einzelnen Ausführungsbeispiele wurde immer noch offen gelassen, wie die permanent magnetisierten Pole permanent magnetisiert sind.

Eine vorteilhafte Ausführungsform sieht dabei vor, dass die permanent magnetisierten Pole durch mindestens einen diesen zugeordneten Permanentmagneten magnetisiert sind.

Besonders günstig ist es, wenn die permanent magnetisierten Pole selbst aus permanent magnetisiertem Material ausgebildet sind.

Beispielsweise ist dabei vorgesehen, dass die permanent magnetisierten Pole aus hartmagnetischem Material gebildet sind.

Im einfachsten Fall sind die permanent magnetisierten Pole durch in den Polträger eingesetzte Permanentmagnete gebildet.

Vorzugsweise ist im Fall eines derartigen Polträgers vorgesehen, dass der die permanent magnetisierten Pole aufweisende Polträger einen magnetischen Rückschlusskörper umfasst, an dem die permanent magnetisierten Pole sitzen.

Im Zusammenhang der bisherigen Beschreibung der verschiedenen Ausführungsbeispiele wurde dabei offen gelassen, ob der innere oder der äußere Polträger die permanent magnetisierten Pole aufweist.

So sieht eine vorteilhafte Lösung vor, dass der äußere Polträger die permanent magnetisierten Pole aufweist.

Alternativ oder ergänzend ist es ebenfalls denkbar, dass der innere Polträger die permanent magnetisierten Pole aufweist.

Es ist aber auch denkbar, dass einer der Polträger durch eine Kurzschlusswicklung magnetisierte Pole aufweist. Dies könnte ebenfalls der äußere Polträger sein. Als besonders vorteilhaft hat es sich in diesem Fall, insbesondere aufgrund der räumlichen Bedingungen, erwiesen, wenn der innere Polträger durch eine Kurzschlusswicklung magnetisierte Pole aufweist.

Hinsichtlich der weiteren Ausbildung der inneren Pole im Einzelnen wurden bislang keine näheren Angaben gemacht. Beispielsweise können die inneren Pole so ausgebildet sein, dass diese sich in ihrer Umlaufrichtung ungefähr über jeweils einen der innenliegenden Polköpfe des intermediären Polträgers erstrecken.

Bei einer Optimierung des zur Verfügung stehenden Drehmoments hat es sich als günstig erwiesen, wenn die inneren Pole sich in Umlaufrichtung über mehrere der innenliegenden Polköpfe des intermediären Polträgers erstrecken.

Um derart sich in ein über einen großen Winkelbereich in Umlaufrichtung erstreckende innere Pole kostengünstig herstellen zu können, ist es vorteilhaft, wenn sich die inneren Pole jeweils aus mehreren Polköpfen zusammensetzen.

Ferner ist es, insbesondere wenn hohe Drehzahlen angestrebt werden, günstig, wenn die inneren Pole durch eine radial außenliegende Stützstruktur umschlossen sind, so dass ein radiales Lösen der Polkörper der inneren Pole vermieden wird.

Vorzugsweise ist dabei die Stützstruktur aus einem nicht magnetischen und nicht magnetisierbaren sowie elektrisch isolierenden Material ausgebildet.

Besonders günstig ist es dabei, wenn die Stützstruktur eine Stützstruktur mit umlaufenden gewickelten Stützfasern ist.

Eine derartige Stützstruktur hat bei geringer radialer Erstreckung eine optimale radiale Festigkeit zum Halten der inneren Pole.

Insbesondere ist bei einer derartigen Stützstruktur vorgesehen, dass diese mit Vorspannung hergestellt ist und somit aufgrund dieser Vorspannung bereits ohne Rotation die inneren Pole in radialer Richtung zur Drehachse hin beaufschlagt.

Hinsichtlich der Lagerung der Polträger relativ zueinander wurden bislang keine näheren Angaben gemacht. Prinzipiell wäre es denkbar, den mit dem Antriebselement verbundenen und den mit dem Abtriebselement verbundenen Polträger jeweils separat in einem Gehäuse zu lagern. Eine besonders günstige Lösung sieht jedoch vor, dass der innere Polträger gegenüber dem intermediären Polträger über ein Lager drehbar abgestützt ist, so dass diese Lagerung zwischen dem inneren Polträger und dem intermediären Polträger eine gegenseitige Abstützung darstellt, die nicht zwingend über ein Getriebegehäuse erfolgen muss.

Ferner ist vorzugsweise vorgesehen, dass der intermediäre Polträger seinerseits an zwei in Richtung der Achse im Abstand voneinander angeordneten Lagern gegenüber einem Getriebegehäuse gelagert ist.

Vorzugsweise ist dabei ebenfalls noch vorgesehen, dass der innere Polträger zumindest mit einem Lager an einem Getriebegehäuse gelagert ist.

Die Erfindung betrifft außerdem einen Werkzeughalter für ein angetriebenes Werkzeug, umfassend ein Werkzeughaltergehäuse, eine drehbar am Werkzeughaltergehäuse gelagerte Antriebswelle mit einem Antriebselement, eine Abtriebswelle mit einer Werkzeugaufnahme und eine die Antriebswelle und die Abtriebswelle koppelnde Getriebeeinheit, wobei erfindungsgemäß die Getriebeeinheit entsprechend einem oder mehreren der voranstehend beschriebenen Merkmale ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Figur 1    einen schematischen Querschnitt durch ein erstes Ausführungsbeispiel eines erfindungsgemäßen magnetischen Getriebes in einer ersten Stellung der Polträger relativ zu einander;

Figur 2    einen Schnitt ähnlich Figur 1 durch das erste Ausführungsbeispiel in einer zweiten Stellung der Polträger relativ zueinander;

Figur 3    einen Schnitt ähnlich Figur 1 durch ein zweites Ausführungsbeispiel eines erfindungsgemäßen magnetischen Getriebes;

Figur 4    einen Schnitt ähnlich Figur 1 eines dritten Ausführungsbeispiels eines erfindungsgemäßen magnetischen Getriebes;

Figur 5    einen Schnitt ähnlich Figur 1 durch ein viertes Ausführungsbeispiel eines erfindungsgemäßen magnetischen Getriebes in einer ersten Relativstellung der Polträger zueinander;

Figur 6    einen Schnitt ähnlich Figur 5 des vierten Ausführungsbeispiels in einer zweiten Relativstellung der Polträger;

Figur 7     einen Schnitt ähnlich Figur 5 durch das vierte Ausführungsbeispiel des erfindungsgemäßen Getriebes in einer dritten Relativstellung der Polträger zueinander;

Figur 8     einen Längsschnitt durch ein Ausführungsbeispiel eines erfindungsgemäßen Werkzeughalters mit einem fünften Ausführungsbeispiel eines erfindungsgemäßen magnetischen Getriebes;

Figur 9     eine perspektivische Darstellung eines intermediären Polträgers des fünften Ausführungsbeispiels des erfindungsgemäßen magnetischen Getriebes gemäß Figur 8;

Figur 10    eine vergrößerte Draufsicht auf den intermediären Polträger gemäß Figur 9 in Richtung des Pfeils A in Figur 9;

Figur 11    eine perspektivische Darstellung des intermediären Polträgers, verbunden mit einer Antriebswelle und versehen mit einer Stützeinrichtung und

Figur 12    einen Schnitt längs Linie 12 - 12 in Figur 8.

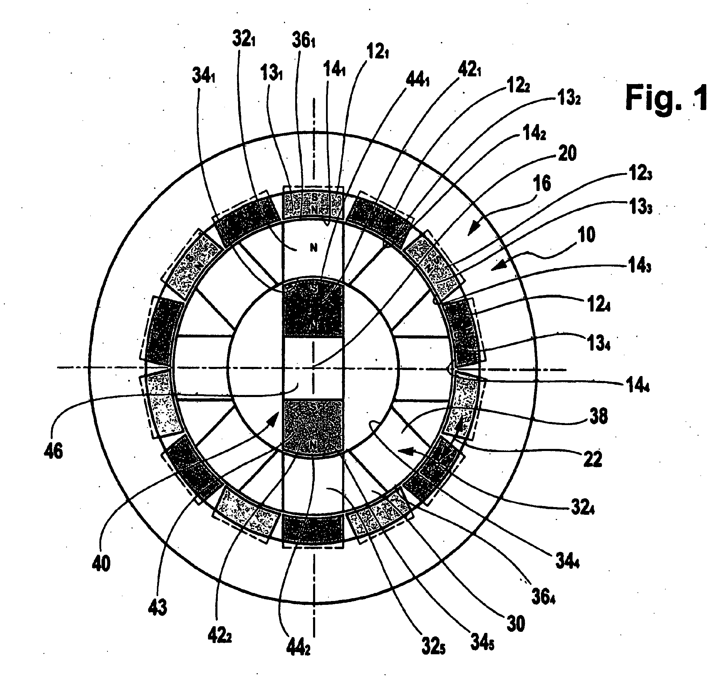

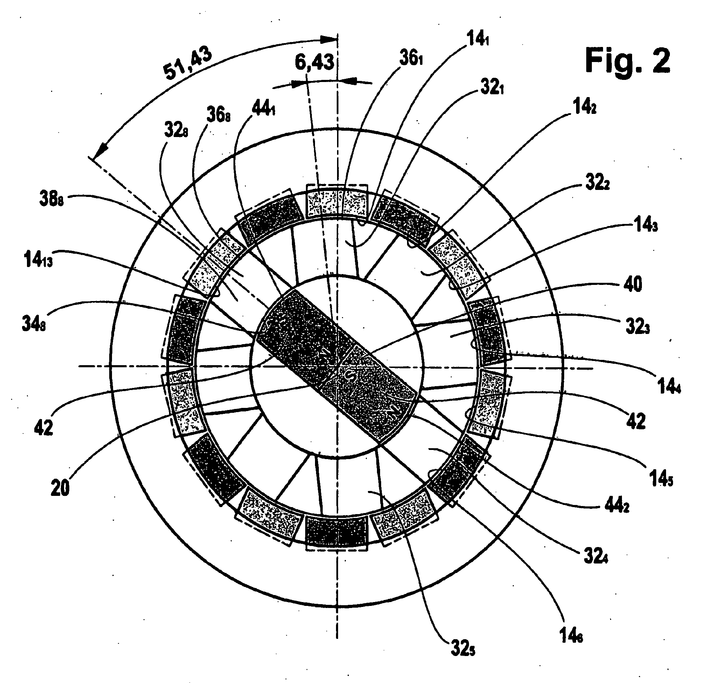

Ein in Figur 1 und 2 dargestelltes erstes Ausführungsbeispiel eines erfindungsgemäßen magnetischem Getriebes, umfasst einen äußeren Polträger 10, der mit einer Reihe von äußeren Polen 12 versehen ist und diese trägt.

Die äußeren Pole 12 weisen ihrerseits Polköpfe 14 auf, die in konstantem radialem Abstand um eine Drehachse 20 herum und dieser zugewandt angeordnet sind, wobei die äußeren Pole 12 bezogen auf die Drehachse 20 in einer Umlaufrichtung 22 oder einer Azimutalrichtung 22 aufeinanderfolgend angeordnet sind.

Vorzugsweise sind die äußeren Pole 12 durch Permanentmagnete 13 gebildet, die mit einer magnetischen Polarität N oder S den Polkopf 14 bilden und mit ihrer anderen magnetischen Polariät S bzw. N einem Rückschlusskörper 16 des äußeren Polträgers 10 zugewandt sind, so dass jeder Polkopf 14 nur eine einzige Polariät, nämlich ausschließlich N oder ausschließlich S hat.

Dabei sind die magnetischen Polaritäten der Polköpfe 14 so gewählt, dass in der Umlaufrichtung 22 oder Azimutalrichtung 22 die magnetische Polarität zwischen aufeinanderfolgenden Polköpfen 14 wechselt, das heißt, dass beispielsweise beginnend bei einem Polkopf $14_1$ mit der magnetischen Polarität N der in der Umlaufrichtung 22 oder Azimutalrichtung 22 nächstfolgende Polkopf $14_2$ die magnetische Polarität S aufweist, während der wiederum nächstfolgende Polkopf $14_3$ wiederum die magnetische Polarität N aufweist, und so weiter.

Der äußere Polträger 10 umschließt dabei einen intermediären Polträger 30, welcher ebenfalls in der Umlaufrichtung 22 oder Azimutalrichtung 22 aufeinanderfolgend angeordnete intermediäre Pole 32 aufweist, die jeweils mit einem radial innenliegenden Polkopf 34 und einem radial außenliegenden und dem äußeren Polträger 10 zugewandten Polkopf 36 versehen sind, wobei sich zwischen den beiden Polköpfen 34, 36 ein Polkörper 38 erstreckt, der aus magnetisierbarem Material, vorzugsweise weichmagnetischem Material, hergestellt ist.

Vorzugsweise liegen dabei sowohl die innenliegenden Polköpfe 34 ihrerseits im selben radialen Abstand von der Drehachse 20 und auch die außenliegenden Polköpfe 36 liegen ihrerseits wieder im gleichen radialen Abstand von der Drehachse 20, so dass in der Umlaufrichtung 22 oder Azimutalrichtung 22 alle Polkörper 38 in derselben radialen Position und Ausrichtung aufeinanderfolgend in dem intermediären Polträger 30 angeordnet sind.

Ferner umschließt der intermediäre Polträger 30 einen inneren Polträger 40, welcher bei dem dargestellten ersten Ausführungsbeispiel zwei einander gegenüberliegende innere Pole 42 aufweist, deren Polköpfe 44 dem intermediären Polträger 30, insbesondere dessen innenliegenden Polköpfen 34, zugewandt angeordnet sind, wobei bei diesem Äusführungsbeispiel die inneren Pole 42 ebenfalls Permanentmagneten 43 sind, welche auf einem Rückschlusskörper 46 sitzen.

Auch bei den inneren Polen 42 wechselt in der Umlaufrichtung 22 oder Azimutalrichtung 22 die magnetische Polarität von Polkopf $44_1$ zu Polkopf $44_2$. Im Falle zweier innerer Pole 42 sind zwei Polköpfe 44 vorgesehen, deren magnetische Polarität unterschiedlich ist. Beispielsweise ist der Polkopf $44_1$ ein Südpol S, während der andere Polkopf $44_2$ ein Nordpol N ist. Dabei ist zu berücksichtigen, dass jeder der inneren Pole 42 durch einen Permanentmagnet 43 gebildet ist, der wiederum mit der Seite seiner entgegengesetzten magnetischen Polarität N bzw. S an dem Rückschlusskörper 46 anliegt.

Den beiden inneren Polen 42 und ihren Polköpfen 44 unterschiedlicher magnetischer Polarität sind beim ersten Ausführungsbeispiel insgesamt 8 intermediäre Pole 32 zugeordnet, und diesen 8 intermediären Polen 32 stehen insgesamt 14 äußere Pole 12 gegenüber, deren äußere Polköpfe 14 in Umlaufrichtung 22 oder Azimutalrichtung 22 die magnetische Polarität beim Übergang von einem der Polköpfe 14 zum nächstliegenden der Polköpfe 14 wechseln.

Somit deformiert der intermediäre Polträger 30 mit seinen intermediären Polen 32, deren außenliegende Polköpfe 36 lediglich durch einen Luftspalt getrennt sich an den Polköpfen 14 der äußeren Pole 12 vorbeibewegen können, das von den permanent magnetisierten äußeren Polen 12 erzeugte Magnetfeld und, sofern eine Relativdrehung zwischen dem äußeren Polträger 10 und dem intermediären Polträger 30 erfolgt, dreht sich das deformierte Magnetfeld um die Achse 20.

Dadurch wird zwischen den innenliegenden Polköpfen 34 des intermediären Polträgers 30 ein Magnetfeld erzeugt, das einen derartigen Verlauf haben muss, dass sich der innere Polträger 40 stets eindeutig ausrichten kann, um sinnvolle Laufeigenschaften des magnetischen Getriebes zu erreichen.

Wie in Figur 1 und 2 dargestellt, richtet sich der innere Polträger 40 stets so aus, dass jeder von dessen einander bezüglich der Drehachse 20 gegenüberliegende Polköpfen 44 jeweils einem der innenliegenden Polköfe 34 der intermediären Pole 32 zugeordnet ist, wobei in diesem Fall der die magnetische Polarität S aufweisende Polkopf $44_1$ einem intermediären Pol 32 gegenübersteht, der durch den jeweiligen äußeren Pol 12 eine maximale Magnetisierung mit der magnetischen Polarität N erfährt, und der die magnetische Polarität N aufweisende Polkopf $44_2$ einen intermediären Pol 12 mit maximaler Magnetisierung mit der magnetischen Polariät S gegenübersteht.

Wie in Figur 1 dargestellt, ist dies beispielsweise bei dem intermediären Pol $32_1$ der Fall, wenn dieser unmittelbar, lediglich durch einen Luftspalt getrennt dem Polkopf $14_1$ des äußeren Polträgers 10 gegenübersteht, der die magnetische Polarität N aufweist, so dass damit zwangsläufig auch der intermediäre Pol $32_1$ die magnetische Polarität N aufweist, und folglich der innere Polkopf $44_1$ mit der magnetischen Polariät S die Tendenz hat, sich gegenüberliegend zum innenliegenden Polkopf $34_1$ auszurichten.

Wie in Figur 2 dargestellt, führt bereits eine geringe Relativdrehung zwischen dem äußeren Polträger 10, der stationär dargestellt ist, und dem intermediären Polträger 30 dazu, dass der außenliegende Polkopf $36_1$ des intermediären Pols $32_1$ nicht mehr in vollem Umfang dem äußeren Polkopf $14_1$ gegenüberliegend angeordnet ist, sondern in dem in Figur 2 dargestellten Fall der außenliegende Polkopf $36_8$ dem äußeren Polkopf $14_{13}$ mit voller Überdeckung gegenübersteht, so dadurch, dass der außenliegende Polkopf $36_8$ dem äußeren Polkopf $14_{13}$ gegenübersteht, der Polkörper $38_8$ entsprechend der magnetischen Polarität N des äußeren Polkopfs $14_{13}$ magnetisiert wird.

Damit hat der innenliegende Polkopf $34_8$ des intermediären Polträgers 30 dieselbe magnetische Polarität N und somit wird sich der innere Polträger 40 mit seinem Polkopf $44_1$ mit der magnetischen Polarität S so ausrichten, dass dieser Polkopf $44_1$ genau dem Polkopf $34_8$ gegenüberliegt. Dabei hat sich, wie in Figur 2 dargestellt, der intermediäre Polträger 30 lediglich um einen Winkel von 6,43° gedreht, während zur Neuausrichtung des inneren Polträgers 40 eine Drehung desselben auf 51,43° erforderlich ist, so dass beispielsweise die Drehung des inneren Polträgers 40 gegenüber der Drehung des intermediären Polträgers 30 um einen Faktor 8 größer ist.

Dieselben Überlegungen gelten dabei mit umgekehrter magnetischer Polarität für die Ausrichtung des Polkopfs $44_2$ bezüglich des intermediären Polträgers 30, wobei zunächst bei der in Figur 1 dargestellten Stellung der Polkopf $44_2$ dem Polkopf $34_5$ des intermediären Pols $32_5$ zugeordnet ist, während nach einer geringfügigen Drehung um beispielsweise 6,43°, dargestellt in Figur 2, der Polkopf $44_2$ stärker gedreht ist und in diesem Fall der Polkopf $44_2$ dem intermediären Pol $32_4$ zugeordnet ist, wie in Figur 2 dargestellt, so dass dadurch der gesamte innere Polträger 40 im von dem intermediären Polträger 30 innerhalb desselben erzeugten Magnetfeld eindeutig ausgerichtet wird.

Dabei erzeugen zusätzlich noch diejenigen intermediären Pole 32, die nicht mit ihren außenliegenden Polköpfen 36 eindeutig vor einem der äußeren Polköpfe 14 stehen, beiderseits der inneren Pole $42_1$ und $42_2$ einen symmetrischen Feldverlauf, der die eindeutige Ausrichtung der inneren Pole 42 relativ zu den entsprechenden intermediären Polen 32 nicht stört.

Bei dem ersten Ausführungsbeispiel des erfindungsgemäßen magnetischen Getriebes kann einer der Polträger 10, 30, 40 stationär angeordnet sein, während sich die anderen der Polträger 10, 30, 40 um die Drehachse 20 drehen lassen und hierzu in entsprechenden Lagern drehbar gelagert sind, wobei einer der drehbar gelagerten Polträger 10, 30, 40 mit einem Antriebselement verbunden ist und somit antreibbar ist, während der andere der Polträger 10, 30, 40 mit einem Abtriebselement verbunden ist und somit in der Lage ist, die vom Antriebselement eingespeiste mechanische Energie über das Abtriebeselement abzugeben.

In einem besonders günstigen Fall des ersten Ausführungsbeispiels bildet dabei beispielsweise der äußere Polträger 10 ein Gehäuse für das magnetische Getriebe und ist daher seinerseits stationär angeordnet, während der intermediäre Polträger 30 und der innere Polträger 40 um die Drehachse 20 drehbar gelagert sind.

Vorzugsweise erfolgt bei dem dargestellten ersten Ausführungsbeispiel des erfindungsgemäßen magnetischen Getriebes ein Antrieb des intermediären Polträgers 30 durch Drehen desselben um die Drehachse 20 und ein Abtrieb ist mit dem inneren Polträger 40 gekoppelt, so dass der Abtrieb mit einer höheren Drehzahl dreht als der Antrieb.

Beispielsweise dreht sich im vorliegenden Fall der innere Polträger 40 mit der 8-fachen Drehzahl des intermediären Polträgers 30.

Diese Verhältnisse lassen sich auch umkehren, wenn der innere Polträger 40 angetrieben wird und der intermediäre Polträger 30 mit dem Abtrieb gekoppelt ist.

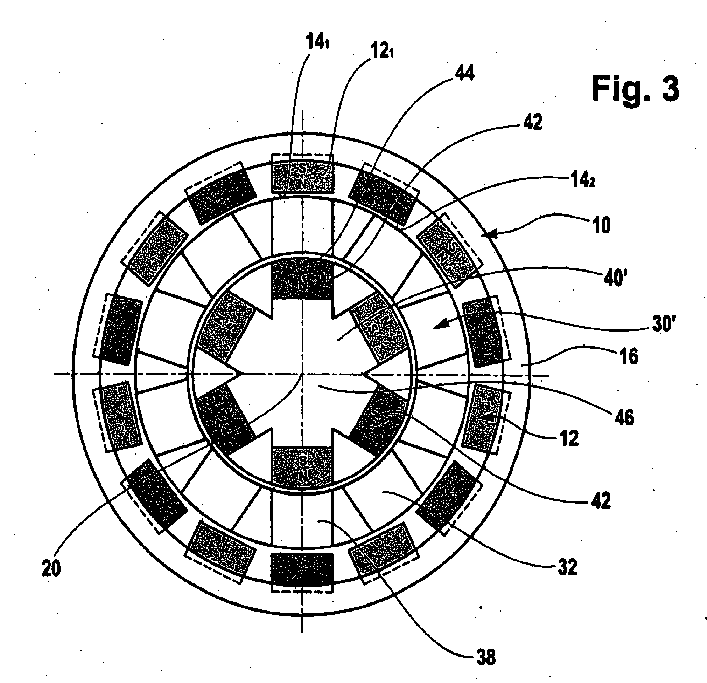

Bei einem zweiten Ausführungsbeispiel eines erfindungsgemäßen magnetischen Getriebes, beispielsweise dargestellt in Figur 3, sind diejenigen Teile, die mit den des ersten Ausführungsbeispiels identisch sind, mit denselben Bezugszeichen versehen, so dass hinsichtlich deren Beschreibung vollinhaltlich auf die Ausführungen zum ersten Ausführungsbeispiel Bezug genommen werden kann.

Insbesondere ist der äußere Polträger 10 identisch ausgebildet wie beim ersten Ausführungsbeispiel. Dagegen umfasst der intermediäre Polträger 30' im Gegensatz zum ersten Ausführungsbeispiel insgesamt 10 intermediäre Pole 32, die in dem intermediären Polträger 30' angeordnet sind, wobei die intermediären Pole 32 die Polkörper 38 aufweisen, die mit denen des ersten Ausführungsbeispiels identisch sind.

Ferner ist der innere Polträger 40' im Gegensatz zum ersten Ausführungsbeispiel aus insgesamt 6 inneren Polen 42 ausgebildet, die auf einem gemeinsamen Rückschlusskörper 46 sitzen, wobei die inneren Pole 42 in gleicher Weise wie beim ersten Ausführungsbeispiel durch Permanentmagnete 43 gebildet sind, die mit einem ihrer magnetischen Pole N, S jeweils den Polkopf 44 bilden, wenn sie mit dem anderen der magnetischen Pole S, N dem Rückschlusskörper 46 zugewandt sind.

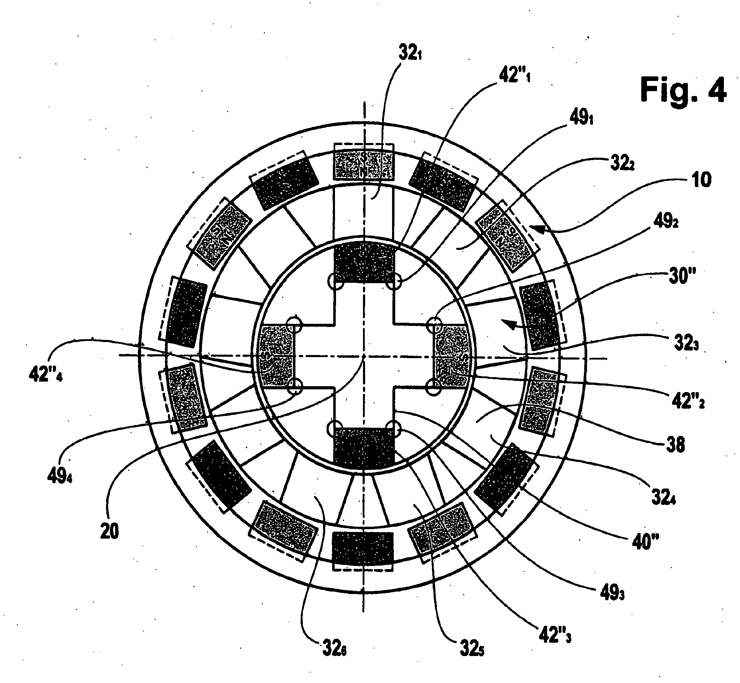

Bei einem dritten Ausführungsbeispiel des erfindungsgemäßen magnetischen Getriebes, dargestellt in Figur 4, ist der äußere Polträger 10 ebenfalls in gleicher Weise ausgebildet wie beim ersten Ausführungsbeispiel.

In Abwandlung hierzu ist der intermediäre Polträger 30" mit insgesamt 9 Polen 32 versehen, deren Polkörper 38 mit denen des ersten Ausführungsbeispiels identisch sind.

Im Gegensatz zum ersten Ausführungsbeispiel ist allerdings der innere Polträger 40" mit insgesamt 4 Polen 42" versehen, die nicht mit denen des ersten und des zweiten Ausführungsbeispiels identisch sind, sondern durch Kurzschlusswicklungen 49 gebildet sind, die zur Erzeugung der magnetischen Polaritäten entsprechend verschaltet sind, wobei der innere Polträger in diesem Fall analog einem Asynchronläufer arbeitet. Derartige Kurzschlusswicklungen lassen sich anstelle von Permanentmagneten bei allen inneren Polträgern einsetzen.

Außerdem werden bei diesem Ausführungsbeispiel die beiden intermediären Pole $32_5$ und $32_6$ gemeinsam dazu eingesetzt, für den inneren Pol $42''_3$ das geeignete eindeutige Magnetfeld zu erzeugen.

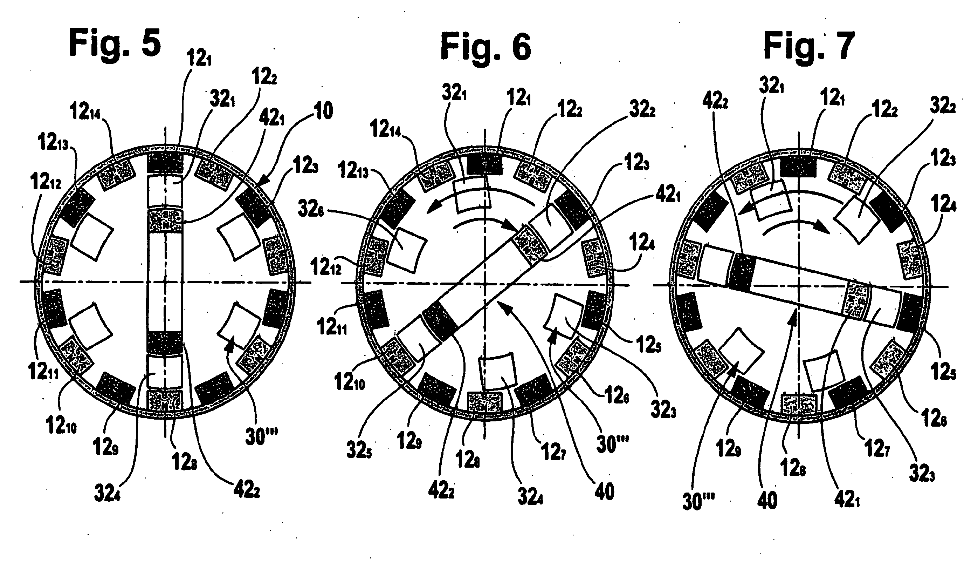

Bei einem vierten Ausführungsbeispiel, dargestellt in den Figuren 5, 6 und 7, ist der äußere Polträger 10 mit derselben Zahl von Polen 12 versehen, die in gleicher Weise wie beim ersten Ausführungsbeispiel ausgebildet sind.

Ferner ist der intermediäre Polträger 30''' mit insgesamt 6 Polen 32 versehen, deren Polkörper 38 in gleicher Weise wie beim ersten Ausführungsbeispiel ausgebildet sind.

Schließlich ist der innere Polträger 40 gleich ausgebildet wie beim ersten Ausführungsbeispiel, wobei die Pole 42 ebenfalls identisch ausgebildet sind wie beim ersten Ausführungsbeispiel.

Bei diesem vierten Ausführungsbeispiel ist die Drehrichtung des inneren Polträgers 40 entgegengesetzt zur Drehrichtung des intermediären Polträgers 30''', da bereits eine geringe Verdrehung des intermediären Polträgers 30''' dazu führt, dass, wie in Figur 6 dargestellt, der intermediäre Pol $32_2$ unmittelbar vor dem äußeren Pol $12_3$ steht und somit der innere Pol $42_1$ sich unmittelbar zu diesem ausrichtet, während der Pol $42_2$ vor dem äußeren Pol $12_{10}$ steht, wodurch ebenfalls eine stabile Drehstellung des ersten Polträgers 40 vorliegt.

Eine weitere geringfügige Drehung des intermediären Polträgers 30''' bewirkt dann, dass als nächstes der innere Pol $42_1$ unmittelbar vor dem intermediären Pol $32_3$ steht, da dieser unmittelbar vor dem äußeren Pol $12_5$ steht.

Somit dreht sich bei diesem Ausführungsbeispiel der innere Polträger 40 in entgegengesetzter Richtung zum intermediären Polträger 30'''.

Zusammenfassend dargestellt ergibt sich für alle Ausführungsbeispiele des magnetischen Getriebes, dass die Übersetzung i

$$i = \frac{2zi - za}{2zi} \text{ ist,}$$

das heißt, dass das Übersetzungsverhältnis i der Quotient aus der doppelten Zahl der intermediären Pole zi abzüglich der Zahl der äußeren Pole za und der doppelten Zahl der intermediären Pole zi ist.

Ferner ergibt sich noch die erforderliche Zahl der inneren Pole zin

$$zin = |2zi - za|$$

Das heißt, dass die Zahl der inneren Pole zin gleich dem Betrag aus der Differenz der doppelten Zahl der intermediären Pole zi und der Zahl der äußeren Pole za ist.

Wobei bei za < 2zi die Drehrichtung des intermediären Polträgers 30 gleich der des inneren Polträgers ist und bei za > 2zi die Drehrichtung des intermediären Polträgers 30 entgegengesetzt zur Drehrichtung des inneren Polträgers 40 verläuft.

Ein erfindungsgemäßes magnetisches Getriebe 100, beispielsweise gemäß einem der voranstehenden Ausführungsbeispiele, kann in einen Werkzeughalter 102 zum Antrieb eines Werkzeugs W eingesetzt werden, wie anhand des nachfolgenden Ausführungsbeipiels eines erfindungsgemäßen Werkzeughalters mit einem fünften Ausführungsbeispiel des magnetischen Getriebes beschrieben.

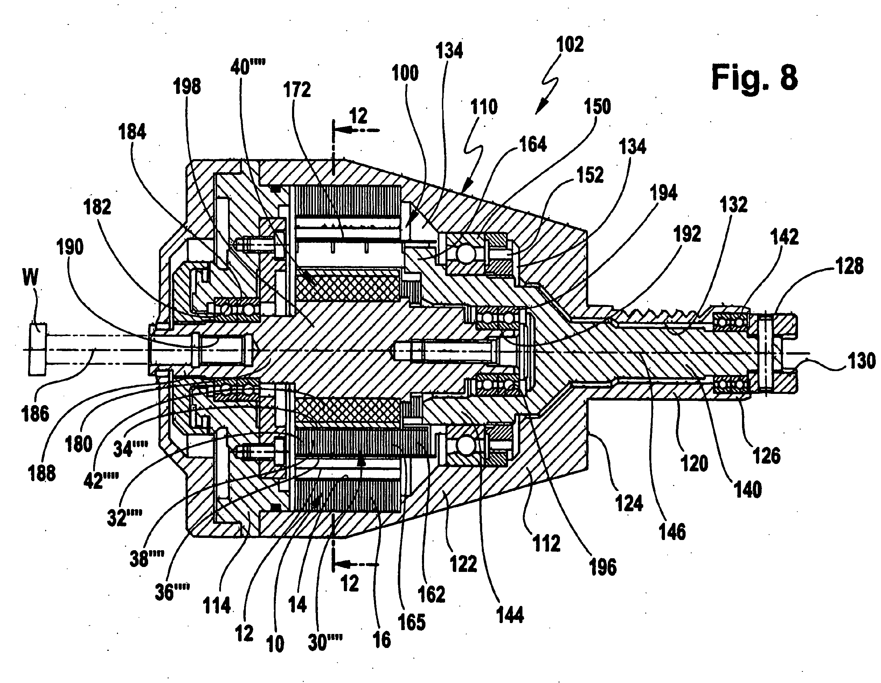

Ein Ausführungsbeispiel eines erfindungsgemäßen Werkzeughalters, dargestellt in Figur 8, umfasst ein als Ganzes mit 110 bezeichnetes Gehäuse, welches aus einem werkzeugträgerseitigen Gehäuseteil 112, einem werkzeugseitigen Gehäuseteil 114 zusammengesetzt ist.

Das werkzeugträgerseitige Gehäuseteil 112 umfasst dabei einen in einen Werkzeugträger einsetzbaren Schaft oder Halteansatz 120 sowie einen becherartig ausgebildeten Abschnitt 122, welcher mindestens eine Anlagefläche 124 aufweist, mit welcher der Abschnitt 122 an einer Gegenfläche des Werkzeugträgers anlegbar ist.

Vorzugsweise erstreckt sich der Halteansatz 120 ausgehend von dem Abschnitt 122 mit einem gegenüber dem Abschnitt 122 reduzierten Durchmesser bis zu einem Ende 126 desselben, über welches ein Antriebselement 128 übersteht, das seinerseits beispielsweise zum Antreiben desselben ein Kupplungsstück 130 aufweist.

Der Halteansatz 120 ist von einem sich in seiner Längsrichtung von dem Ende 126 ausgehend in diesen hineinerstreckenden Durchbruch 132 durchsetzt, welcher sich durch den gesamten Halteansatz 120 bis zu einem Innenraum 134 des becherartigen Abschnitts 122 erstreckt.

Der Durchbruch 132 ist dabei von einer Antriebswelle 140 durchsetzt, welche das über das Ende 126 überstehende Antriebselement 128 trägt und nahe dem Ende 126 mit einer ersten Lagereinheit 142 an dem Halteansatz 120 gelagert ist.

An die Antriebswelle 140 schließt sich ein in dem Innenraum 134 des Abschnitts 122 liegender Haltekörper 144 an, wobei dieser Haltekörper 144 vorzugsweise einstückig an die Antriebswelle 140 angeformt ist, so dass beide rotationssymmetrisch zu einer Achse 146 ausgebildet sind und drehbar in dem werkzeugträgerseitigen Gehäuseteil 112 gelagert sind.

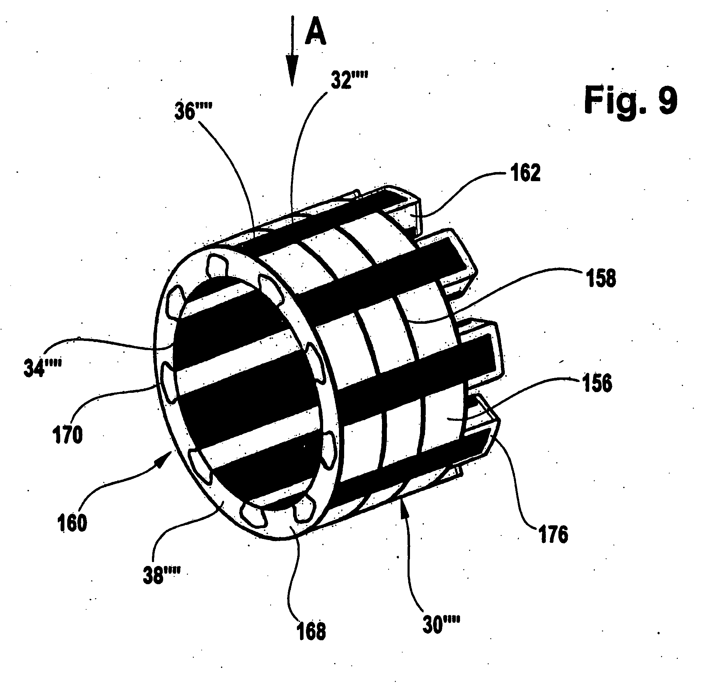

Mit dem Haltekörper 144 ist der intermediäre Polträger 30'''' des fünften Ausführungsbeispiels eines magnetischen Getriebes 100 verbunden, welcher, wie in Figur 9 dargestellt, eine Vielzahl von in gleichem radialem Abstand von der Achse 146 angeordneten intermediären Polen 32'''' trägt, die um die Achse 146 herum in gleichen Winkelabständen angeordnet sind, wobei die Drehachse 20 des intermediären Polträgers 30'''' mit der Achse 146 zusammenfällt.

In Fortsetzung der Antriebswelle 140 ist der Haltekörper 144 durch ein zweites Lager 150 in einem ersten Abschnitt 152 des Innenraums 134 in dem Gehäuseteil 112 um die Achse 146 drehbar gelagert.

Der intermediäre Polträger 30'''' ist dabei aus den Polkörpern 38'''' zusammengesetzt, wobei Zwischenräume 156 zwischen den Polkörpern durch ein nichtmagnetisches und nicht magnetisierbares sowie elektrisch isolierendes Material ausgefüllt sind und zusätzlich sind die Polkörper 38'''' noch durch Stege 158 miteinander verbunden sind, so dass der Polträger 30'''' eine zusammenhängende Baugruppe 160 bildet, die Formschlusselemente 162 aufweist, welche mit entsprechend in diese eingreifenden Formschlusselementen 164 des Haltekörpers 144 zusammenwirken, um die Einheit 160 stabil mit dem Haltekörper 144 und somit der Antriebswelle 140 zu verbinden.

Dabei können die Polkörper 38'''' zusammenhängende massive Körper aus magnetisierbarem Material, beispielsweise Weicheisen sein.

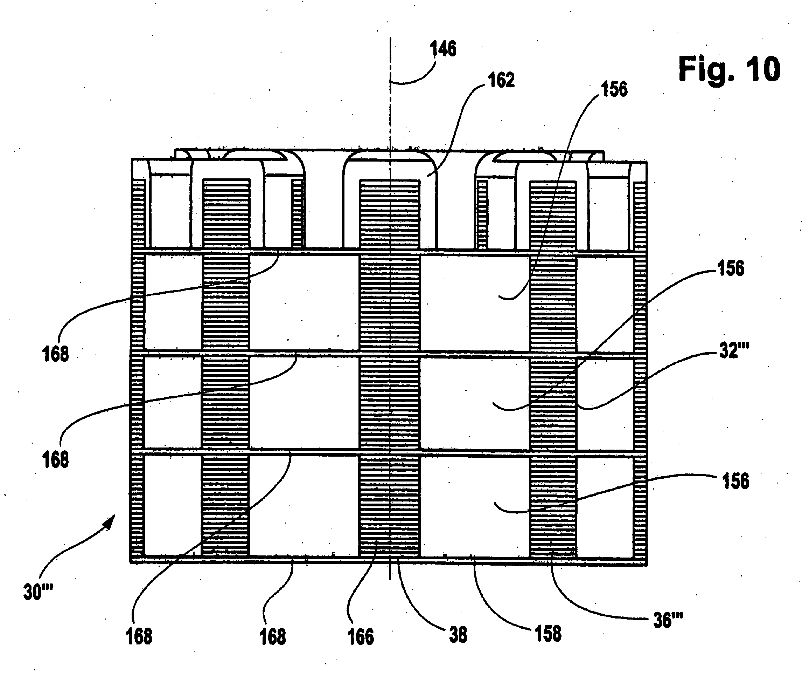

Vorzugsweise ist jeder einzelne Polkörper 38'''' durch in Richtung der Drehachse 146 zu Paketen 165 gestapelte einzelne Bleche 166 gebildet, und die Stege 158 sind Teilbereiche von Blechringen 168, die einerseits mit Segmentabschnitten 169 flächig auf dem jeweiligen Paket 165 von Blechen 166 aufliegen und andererseits sich noch mit in radialer Richtung verdünnten Stegbereichen 170 über die Zwischenräume 156 zwischen den Polkörpern 38'''' hinwegerstrecken und somit insgesamt einen geschlossen Ring bilden (Fig. 9, 10).

Die Bleche 166 und die Ringbleche 168 ergeben somit insgesamt einen bereits in sich stabilen und die einzelnen Polkörper 38'''' definiert um die Drehachse 146 positionierenden Gitterkörper, der lediglich noch weiter durch Ausfüllen der Zwischenräume 156 mit Vergussmasse stabilisiert wird (Fig. 9).

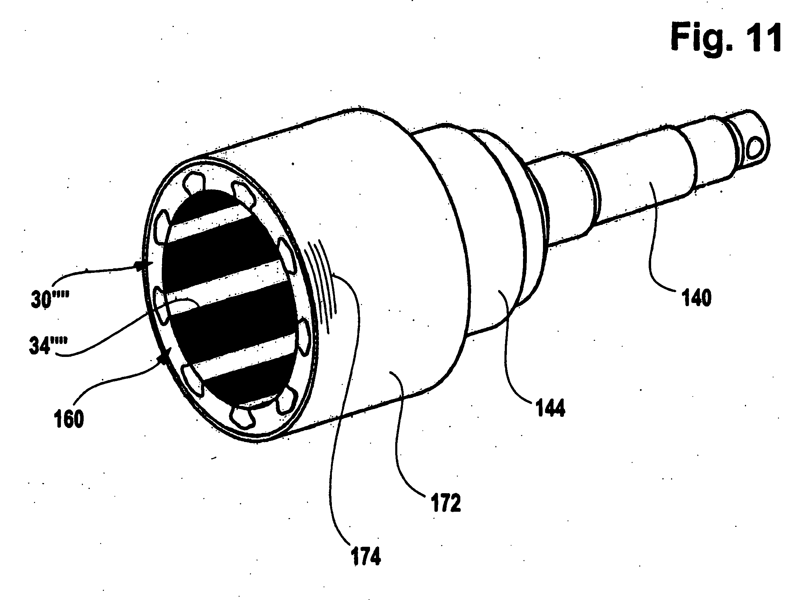

Zur Sicherung der Polkörper 38'''' gegen radiale Kräfte wird die gesamte Einheit 160 durch eine Bandage 172 umschlossen, welche vorzugsweise aus einzelnen Fasern 174 gewickelt ist, die um die Drehachse 146 umlaufend auf einer Außenseite 176 der Einheit 160, vorzugsweise mit Vorspannung, aufliegen (Fig. 9 bis 11).

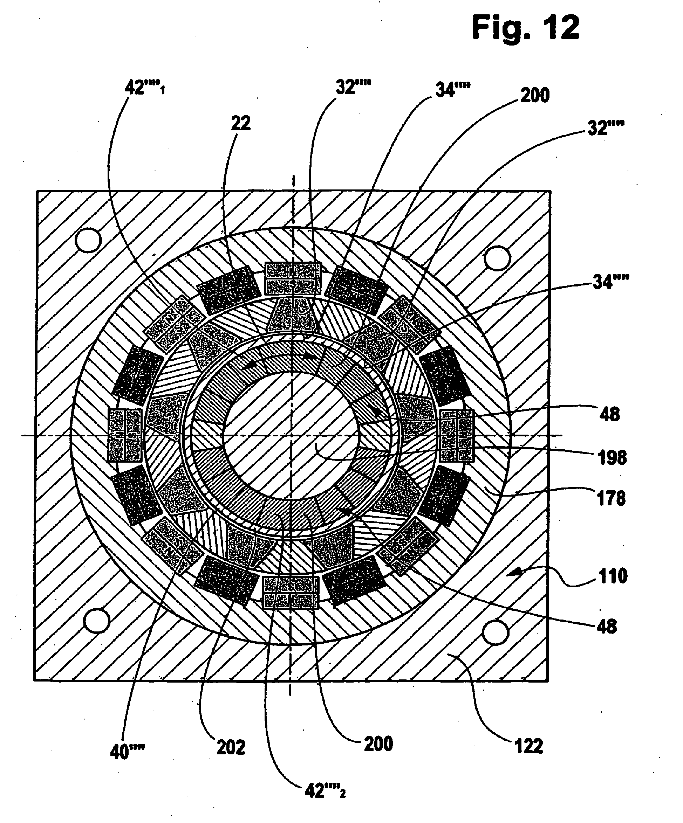

Die intermediären Pole 32'''' des intermediären Magnetpolträgers 30'''' liegen dabei innerhalb eines äußeren Polträgers 10, der in einem Teilbereich des becherförmigen Abschnitts 122 eingesetzt ist und eine Vielzahl von äußeren Polen 12 aufweist, die jeweils an ihren den intermediären Polen 32'''' zugewandten Polköpfen 14 abwechselnd magnetisiert sind, so dass in der Umlaufrichtung 22 um die Achse 146 jeweils Nordpole N und Südpole S einander abwechseln (Fig. 12).

Die äußeren Pole 12 werden dabei durch Permanentmagnete 13 gebildet, für welche der äußere Polträger 10 gleichzeitig den Rückschlusskörper 16 darstellt, wobei, wie in Figur 8 dargestellt, auch der Rückschlusskörper 16 aus in Richtung der Achse 146 zu Paketen gestapelten Blechen 178 gebildet und in den Innenraum 134 eingesetzt und stationär mit dem Abschnitt 122 verbunden ist.

Das werkzeugseitige Gehäuseteil 114 ist mit einem Durchbruch 182 versehen, durch welchen sich eine Abtriebswelle 180 hindurch erstreckt.

Die Abtriebswelle 180 ist dabei durch eine Lagereinheit 184 in dem Durchbruch 182 drehbar gelagert, und zwar so, dass deren Achse 186 koaxial zur Achse 146 verläuft.

Die Abtriebswelle 180 trägt in ihrem über den werkezeugseitigen Gehäuseteil 114 überstehenden Endbereich 188 eine Aufnahme 190 für ein Werkzeug W, welches sich koaxial zur Achse 186 der Abtriebswelle 180 von dieser weg erstreckt.

Ferner erstreckt sich die Abtriebswelle 180 im Anschluss an den Durchbruch 182 durch den intermediären Polträger 30'''' hindurch bis zu einem Wellenende 192, welches mit einem Lager 194 relativ zum Haltekörper 144 und an diesem drehbar gelagert ist, wobei das Lager 194 in einer inneren Ausnehmung 196 des Haltekörpers 144 sitzt.

Die Abtriebswelle 180 weist ferner in einem innerhalb des intermediären Magnetpolträgers 30'''' und der intermediären Pole 32'''' liegenden Bereich 198 den inneren Polträger 40'''' auf, welcher wie in Figur 8 und 12 dargestellt, zwei innere Pole 42'''' trägt, deren Polkörper 48 bei diesem Ausführungsbeispiel durch schalenähnlich aus einzelnen Permanentmagneten 200 zusammengesetzt sind. Die einzelnen Pole 42'''' erstrecken sich mit jeweils ihren den intermediären Polen 32'''' zugewandten Polköpfen 44 in der Umlauf- oder Azimutalrichtung 22 über mehrere der innenliegenden Polköpfe 34'''' der intermediären Pole 32'''' hinweg.

Eine Sicherung der Polkörper 48 relativ zum Rückschlusskörper 46 erfolgt durch eine die Polkörper 48 außenliegend mit Vorspannung auf diese wirkende Stützstruktur 202 aus nichtmagnetischem, nicht magnetisierbaren sowie elektrisch nichtleitendem Material, die vorzugsweise als Bandage mit einer um den inneren Polträger 40'''' mit Vorspannung aufgewickelten Fasern ausgebildet ist.

Zur Optimierung dieses Ausführungsbeispiels des erfindungsgemäßen magnetischen Getriebes sind ferner noch die Polkörper 38'''' so ausgebildet, dass deren außenliegende Polköpfe 36'''' in der Umlauf- oder Azimutalrichtung 22 eine geringere Erstreckung aufweisen als die innenliegenden Polköpfe 34''''.

Der innere Magnetpolträger 40'''' mit den inneren Polen 42'''', der intermediäre Magnetpolträger 30'''' mit den intermediären Polen 32'''' und der äußere Magnetpolträger 10 mit den äußeren Polen 12 bilden dabei insgesamt das magnetisches Übersetzungsgetriebe 100, welches als magnetisches Analogon zu einem Planetengetriebe betrachtet werden kann.

Wenn nun bei dem dargestellten Ausführungsbeispiel der intermediäre Polträger 30'''' mit den intermediären Polen 32'''' durch die Antriebswelle 140 angetrieben wird, so dreht sich der innere Polträger 40'''' mit den inneren Polen 42'''' um einen Faktor 8 schneller, so dass die Abtriebswelle 180 eine achtfach höhere Drehzahl als die Antriebswelle 140 aufweist. Das heißt, dass das magnetische Getriebe 100 im dargestellten Ausführungsbeispiel ein Übersetzungsverhältnis von 1:9 liefert.

Ein derartiges magnetisches Getriebe 100 ist insbesondere dann einzusetzen, wenn mit großer Drehzahl rotierende Werkzeuge W anzutreiben sind, wobei diese hohe Drehzahl von dem Antrieb für den erfindungsgemäßen Werkzeughalter, so wie er im Werkzeugträger vorhanden ist, nicht geliefert werden kann.

Aus diesem Grund erfolgt nun durch das erfindungsgemäße magnetische Getriebe 100 eine achtfache Übersetzung der werkzeugträgerseitig zur Verfügung gestellten Drehzahl zum Antrieb des in der Werkzeugaufnahme 188 angeordneten Werkzeugs W.

## Patentansprüche

**1.** Getriebeeinheit umfassend einen äußeren Polträger (10) mit einer Anzahl von in gleichem radialem Abstand und in Winkelabständen voneinander um eine Drehachse (20) angeordneten äußeren Polen (12), einen inneren Polträger (40) mit einer Anzahl von in gleichem radialem Abstand und in Winkelabständen voneinander um die Drehachse (20) angeordneten inneren Polen (42) und einen intermediären Polträger (30) mit zwischen den äußeren Polen (12) und den inneren Polen (42) in gleichem radialem Abstand und in Winkelabständen voneinander um die Drehachse (20) angeordneten intermediären Polen (32), wobei einer der Polträger (10) stationär angeordnet ist, einer der Polträger (30) mit einem Antriebselement (140) gekoppelt und um die Drehachse (20) relativ zum stationären Polträger (10) drehbar ist und einer der Polträger (40) mit einem Abtriebselement (188) gekoppelt und um die Drehachse (20) relativ zum stationären Polträger (10) drehbar ist, **dadurch gekennzeichnet, dass** jeder der intermediären Pole (32) einen sich zwischen einem dem äußeren Polträger (10) zugewandten außenliegenden Polkopf (36) und einem dem inneren Polträger (40) zugewandten innenliegenden Polkopf (34) erstreckenden Polkörper (38) aus magnetisierbarem Material aufweist und dass das magnetisierbare Material der intermediären Pole (32) durch permanent magnetisierte Pole (12, 42) von mindestens einem der äußeren und inneren Polträger (10, 40) magnetisierbar ist.

**2.** Getriebeeinheit nach Anspruch 1, **dadurch gekennzeichnet, dass** die intermediären Pole (32) das Magnetfeld der permanent magnetisierten Pole (12, 42) des mindestens einen der äußeren und inneren Polträger (10, 40) in ein Magnetfeld transferieren, in dem die Pole (12, 42) des anderen der äußeren und inneren Polträger (10, 40) eindeutig ausrichtbar sind.

**3.** Getriebeeinheit nach einem der voranstehenden Ansprüche, **dadurch gekennzeichnet, dass** die Polkörper (38) der intermediären Pole (32) in dem intermediären Polträger (30) sitzen.

**4.** Getriebeeinheit nach Anspruch 3, **dadurch gekennzeichnet, dass** die im intermediärer Polträger (30) sitzenden Polkörper (38) durch eine den intermediärer Polträger (30)radial außenliegend umschließende Stützstruktur (172) gesichert sind.

**5.** Getriebeeinheit nach Anspruch 4, **dadurch gekennzeichnet, dass** die Stützstruktur eine Stützbandage (172) mit umlaufend gewickelten Stützfasern (174) ist.

**6.** Getriebeeinheit nach einem der voranstehenden Ansprüche, **dadurch gekennzeichnet, dass** die Polkörper (38) der intermediären Pole (32) aus einem zusammenhängenden magnetisierbaren Körper hergestellt sind.

7. Getriebeeinheit nach einem der Ansprüche 1 bis 5, **dadurch gekennzeichnet, dass** die Polkörper (38) durch Blechpakte (165) aus gestapelten Blechen (166) hergestellt sind.

8. Getriebeeinheit nach einem der voranstehenden Ansprüche, **dadurch gekennzeichnet, dass** die außenliegenden Polköpfe (36) der intermediären Pole (32) in Umlaufrichtung (22) eine Winkelausdehnung um die Drehachse (20) aufweisen, welche sich von einer Winkelausdehnung der innenliegenden Polköpfe (34) der intermediären Pole (32) unterscheidet.

9. Getriebeeinheit nach einem der voranstehenden Ansprüche, **dadurch gekennzeichnet, dass** die Polkörper (38) als Segmente in eine Einbettmasse des intermediären Polträger (30) eingebettet sind.

10. Getriebeeinheit nach Anspruch 9, **dadurch gekennzeichnet, dass** die Segmente durch Stege (158) gegeneinander abgestützt sind.

11. Getriebeeinheit nach Anspruch 10, **dadurch gekennzeichnet, dass** die Stege Verbindungsstege (170) zwischen den auf Blechen (166) unterschiedlicher Segmente aufliegenden Segmentabschnitten (169) sind.

12. Getriebeeinheit nach einem der voranstehenden Ansprüche, **dadurch gekennzeichnet, dass** der äußere Polträger (10) in einer Umlaufrichtung (22) um die Drehachse (20) abwechselnd magnetisierte und dem intermediären Polträger (30) zugewandte äußere Polköpfe (14) aufweist.

13. Getriebeeinheit nach einem der voranstehenden Ansprüche, **dadurch gekennzeichnet, dass** der innere Polträger (40) in einer Umlaufrichtung (22) um die Drehachse (20) abwechselnd magnetisierte und dem intermediären Polträger (30) zugewandte innere Polköpfe (44) aufweist.

14. Getriebeeinheit nach einem der voranstehenden Ansprüche, **dadurch gekennzeichnet, dass** sich die Anzahl der äußeren Polköpfe (14) von der Anzahl der inneren Polköpfe (44) unterscheidet.

15. Getriebeeinheit nach Anspruch 14, **dadurch gekennzeichnet, dass** die Anzahl der äußeren Polköpfe (14) größer ist als die Zahl der intermediären Pole (32).

16. Getriebeeinheit nach einem der Ansprüche 14 oder 15, **dadurch gekennzeichnet, dass** die Anzahl der inneren Polköpfe (44) kleiner ist als die Zahl der intermediären Pole (32).

17. Getriebeeinheit nach einem der voranstehenden Ansprüche, **dadurch gekennzeichnet, dass** die Differenz zwischen der doppelten Zahl der intermediären Pole (32) und der Anzahl der äußeren Polköpfe (14) der Anzahl der inneren Polköpfe (44) entspricht.

18. Getriebeeinheit nach einem der voranstehenden Ansprüche, **dadurch gekennzeichnet, dass** die permanent magnetisierten Pole (12, 42) dem intermediären Polträger (30) zugewandte Polköpfe (14, 44) aufweisen, die in einer Umlaufrichtung (22) um die Drehachse (20) eine wechselnde magnetische Polarität (N, S) aufweisen.

19. Getriebeeinheit nach einem der voranstehenden Ansprüche, **dadurch gekennzeichnet, dass** jeder Polkopf (14, 44) der permanent magnetisierten Pole (12, 42) eine einzige magnetische Polarität (N, S) aufweist.

20. Getriebeeinheit nach einem der voranstehenden Ansprüche, **dadurch gekennzeichnet, dass** die permanent magnetisierten Pole (12, 42) durch mindestens einen diesen zugeordneten Permanentmagneten (13) magnetisiert sind.

21. Getriebeeinheit nach einem der voranstehenden Ansprüche, **dadurch gekennzeichnet, dass** die permanent magnetisierten Pole (12, 42) selbst aus permanent magnetisiertem Material ausgebildet sind.

22. Getriebeeinheit nach Anspruch 21, **dadurch gekennzeichnet, dass** die permanent magnetisierten Pole (12, 42) aus hartmagnetischem Material gebildet sind.

23. Getriebeeinheit nach Anspruch 21 oder 22, **dadurch gekennzeichnet, dass** die permanent magnetisierten Pole (12, 42) durch in den Polträger (10, 40) eingesetzte Permanentmagnete (13, 43) gebildet sind.

24. Getriebeeinheit nach einem der Ansprüche 20 bis 23, **dadurch gekennzeichnet, dass** der die permanent magnetisierten Pole (12, 42) aufweisende Polträger (10, 40) einen magnetischen Rückschlusskörper (16, 46) umfasst, an dem die permanent magnetisierten Pole (12, 42) spitzen.

25. Getriebeeinheit nach einem der voranstehenden Ansprüche, **dadurch gekennzeichnet, dass** der äußere Polträger (10) die permanent magnetisierten Pole aufweist.

26. Getriebeeinheit nach einem der voranstehenden Ansprüche, **dadurch gekennzeichnet, dass** der innere Polträger (40) die permanent magnetisierten Pole aufweist.

**27.** Getriebeeinheit nach einem der Ansprüche 1 bis 25, **dadurch gekennzeichnet, dass** einer der Polträger (10, 40) durch eine Kurzschlusswicklung magnetisierte Pole aufweist.

**28.** Getriebeeinheit nach einem der voranstehenden Ansprüche, **dadurch gekennzeichnet, dass** die inneren Pole (42) sich in Umlaufrichtung (22) über mehrere der innenliegenden Polköpfe (34) des intermediären Polträgers (30) erstrecken.

**29.** Getriebeeinheit nach einem der voranstehenden Ansprüche, **dadurch gekennzeichnet, dass** sich die inneren Pole (42) jeweils aus mehreren Polkörperteilen (200) zusammensetzen.

**30.** Getriebeeinheit nach einem der voranstehenden Ansprüche, **dadurch gekennzeichnet, dass** die inneren Pole (42) durch eine radial außenliegende Stützstruktur (202) umschlossen sind.

**31.** Getriebeeinheit nach Anspruch 30, **dadurch gekennzeichnet, dass** die Stützstruktur eine Stützbandage (202) mit umlaufend gewickelten Stützfasern ist.

**32.** Getriebeeinheit nach einem der voranstehenden Ansprüche, **dadurch gekennzeichnet, dass** der innere Polträger (40) gegenüber dem intermediären Polträger (30) über ein Lager (194) drehbar abgestützt ist.

**33.** Getriebeeinheit nach einem der voranstehenden Ansprüche, **dadurch gekennzeichnet, dass** der intermediäre Polträger (30) seinerseits an zwei in Richtung der Achse (146) im Abstand von einander angeordneten Lagern (142, 150) gegenüber einem Getriebegehäuse (110) gelagert ist.

**34.** Getriebeeinheit nach einem der voranstehenden Ansprüche, **dadurch gekennzeichnet, dass** der innere Polträger (40) zumindest mit einem Lager (184) an einem Getriebegehäuse (110) gelagert ist.

**35.** Werkzeughalter für ein angetriebenes Werkzeug, umfassend ein Werkzeughaitergehäuse (110), eine drehbar am Werkzeughaitergehäuse (110) gelagerte Antriebswelle (140) mit einem Antriebselement (130), eine Abtriebswelle (188) mit einer Werkzeugaufnahme (190) und eine die Antriebswelle (140) und die Abtriebswelle (188) koppelnde Getriebeeinheit **dadurch gekennzeichnet, dass** die Getriebeeinheit (100) entsprechend einem der voranstehenden Ansprüche ausgebildet ist.

**Claims**

**1.** Drive transmission unit comprising an outer pole carrier (10) having a number of outer poles (12) arranged radially equidistantly and at angular distances from one another around an axis of rotation (20), an inner pole carrier (40) having a number of inner poles (42) arranged radially equidistantly and at angular distances from one another around the axis of rotation (20), and an intermediate pole carrier (30) having intermediate poles (32) arranged between the outer poles (12) and the inner poles (42) radially equidistantly and at angular distances from one another around the axis of rotation (20), wherein one of the pole carriers (10) is disposed in a stationary manner, one of the pole carriers (30) is coupled to a driving element (140) and rotatable about the axis of rotation (20) relative to the stationary pole carrier (10), and one of the pole carriers (40) is coupled to a driven element (188) and rotatable about the axis of rotation (20) relative to the stationary pole carrier (10),
**characterized in that** each of the intermediate poles (32) comprises a pole body (38) of magnetizable material that extends between an outer pole head (36) facing the outer pole carrier (10) and an inner pole head (34) facing the inner pole carrier (40) and that the magnetizable material of the intermediate poles (32) is magnetizable by permanently magnetized poles (12, 42) of at least one of the outer and inner pole carriers (10, 40).

**2.** Drive transmission unit according to claim 1, **characterized in that** the intermediate poles (32) transfer the magnetic field of the permanently magnetized poles (12, 42) of the at least one of the outer and inner pole carriers (10, 40) into a magnetic field, in which the poles (12, 42) of the other of the outer and inner pole carriers (10, 40) are uniquely alignable.

**3.** Drive transmission unit according to one of the preceding claims, **characterized in that** the pole bodies (38) of the intermediate poles (32) are seated in the intermediate pole carrier (30).

**4.** Drive transmission unit according to claim 3, **characterized in that** the pole bodies (38) seated in the intermediate pole carrier (30) are secured by means of a supporting structure (172) that radially outwardly surrounds the intermediate pole carrier (30).

**5.** Drive transmission unit according to claim 4, **characterized in that** the supporting structure is a supporting binding band (172) comprising circumferentially wound supporting fibres (174).

**6.** Drive transmission unit according to one of the preceding claims, **characterized in that** the pole bodies (38) of the intermediate poles (32) are manufactured from a cohesive magnetizable body.

7. Drive transmission unit according to one of claims 1 to 5, **characterized in that** the pole bodies (38) are manufactured by means of laminated bundles (165) of stacked sheets (166).

8. Drive transmission unit according to one of the preceding claims, **characterized in that** the outer pole heads (36) of the intermediate poles (32) have in circumferential direction (22) an angular extent around the axis of rotation (20) that differs from an angular extent of the inner pole heads (34) of the intermediate poles (32).

9. Drive transmission unit according to one of the preceding claims, **characterized in that** the pole bodies (38) are embedded as segments into an embedding material of the intermediate pole carrier (30).

10. Drive transmission unit according to claim 9, **characterized in that** the segments are supported relative to one another by means of web members (158).

11. Drive transmission unit according to claim 10, **characterized in that** the web members are connecting webs (170) between the segment portions (169) supported on sheets (166) of different segments.

12. Drive transmission unit according to one of the preceding claims, **characterized in that** the outer pole carrier (10) in a circumferential direction (22) around the axis of rotation (20) comprises alternately magnetized outer pole heads (14) facing the intermediate pole carrier (30).

13. Drive transmission unit according to one of the preceding claims, **characterized in that** the inner pole carrier (40) in a circumferential direction (22) about the axis of rotation (20) comprises alternately magnetized inner pole heads (44) facing the intermediate pole carrier (30).

14. Drive transmission unit according to one of the preceding claims, **characterized in that** the number of outer pole heads (14) differs from the number of inner pole heads (44).

15. Drive transmission unit according to claim 14, **characterized in that** the number of outer pole heads (14) is greater than the number of intermediate poles (32).

16. Drive transmission unit according to one of claims 14 or 15, **characterized in that** the number of inner pole heads (44) is lower than the number of intermediate poles (32).

17. Drive transmission unit according to one of the preceding claims, **characterized in that** the difference between twice the number of intermediate poles (32) and the number of outer pole heads (14) corresponds to the number of inner pole heads (44).

18. Drive transmission unit according to one of the preceding claims, **characterized in that** the permanently magnetized poles (12, 42) have pole heads (14, 44) facing the intermediate pole carrier (30) that have an alternating magnetic polarity (N, S) in a circumferential direction (22) around the axis of rotation (20).

19. Drive transmission unit according to one of the preceding claims, **characterized in that** each pole head (14, 44) of the permanently magnetized poles (12, 42) has a single magnetic polarity (N, S).

20. Drive transmission unit according to one of the preceding claims, **characterized in that** the permanently magnetized poles (12, 42) are magnetized by means of at least one permanent magnet (13) that is associated therewith.

21. Drive transmission unit according to one of the preceding claims, **characterized in that** the permanently magnetized poles (12, 42) themselves are formed from permanently magnetized material.

22. Drive transmission unit according to claim 21, **characterized in that** the permanently magnetized poles (12, 42) are formed from magnetically hard material.

23. Drive transmission unit according to claim 21 or 22, **characterized in that** the permanently magnetized poles (12, 42) are formed by permanent magnets (13, 43) inserted into the pole carrier (10, 40).

24. Drive transmission unit according to one of claims 20 to 23, **characterized in that** the pole carrier (10, 40) having the permanently magnetized poles (12, 42) comprises a magnetic return body (16, 46), on which the permanently magnetized poles (12, 42) are seated.

25. Drive transmission unit according to one of the preceding claims, **characterized in that** the outer pole carrier (10) has the permanently magnetized poles.

26. Drive transmission unit according to one of the preceding claims, **characterized in that** the inner pole carrier (40) has the permanently magnetized poles.

27. Drive transmission unit according to one of claims 1 to 25, **characterized in that** one of the pole carriers (10, 40 has poles that are magnetized by means of a shortcircuited winding.

28. Drive transmission unit according to one of the preceding claims, **characterized in that** the inner poles (42) extend in circumferential direction (22) over a plurality of the inner pole heads (34) of the intermediate pole carrier (30).

29. Drive transmission unit according to one of the preceding claims, **characterized in that** the inner poles (42) are each composed of a plurality of pole body parts (200).

30. Drive transmission unit according to one of the preceding claims, **characterized in that** the inner poles (42) are surrounded by a radially outer supporting structure (202).

31. Drive transmission unit according to claim 30, **characterized in that** the supporting structure is a supporting binding band (202) comprising circumferentially wound supporting fibres.

32. Drive transmission unit according to one of the preceding claims, **characterized in that** the inner pole carrier (40) is supported rotatably relative to the intermediate pole carrier (30) by means of a bearing (194).

33. Drive transmission unit according to one of the preceding claims, **characterized in that** the intermediate pole carrier (30) is in turn supported relative to a drive transmission housing (110) on two bearings (142, 150) that are mutually spaced apart in the direction of the axis (146).

34. Drive transmission unit according to one of the preceding claims, **characterized in that** the inner pole carrier (40) is supported at least by one bearing (184) on a drive housing (110).

35. Tool holder for a driven tool, comprising a tool holder housing (110), a driving shaft (140) rotatably supported on the tool holder housing (110) and having a driving element (130), a driven shaft (188) having a tool receiver (190), and a drive transmission unit (210) coupling the driving shaft (140) and the driven shaft (188), **characterized in that** the drive transmission unit (100) is configured according to one of the preceding claims.

**Revendications**

1. Unité d'engrenage comprenant un support de pôle extérieur (10) avec un nombre de pôles (12) extérieurs disposés à la même distance radiale et à des distances angulaires les uns des autres autour d'un axe de rotation (20), un support de pôle intérieur (40) avec un nombre de pôles (42) intérieurs disposés à la même distance radiale et à des distances angulaires les uns des autres autour de l'axe de rotation (20) et un support de pôle (30) intermédiaire avec des pôles (32) intermédiaires disposés entre les pôles extérieurs (12) et les pôles intérieurs (42) à la même distance radiale et à des distances angulaires les uns des autres autour de l'axe de rotation (20), l'un des supports de pôle (10) étant disposé de manière stationnaire, l'un des supports de pôle (30) étant couplé à un élément d'entraînement (140) et pouvant être tourné autour de l'axe de rotation (20) par rapport au support de pôle (10) stationnaire et l'un des supports de pôle (40) étant couplé à un élément de sortie (188) et pouvant être tourné autour de l'axe de rotation (20) par rapport au support de pôle (10) stationnaire, **caractérisée en ce que** chacun des pôles intermédiaires (32) présente un noyau polaire (38) s'étendant entre une borne (36) extérieure tournée vers le support de pôle (10) extérieur et une borne (34) intérieure tournée vers le support de pôle (40) intérieur en matériau magnétisable et **en ce que** le matériau magnétisable des pôles intermédiaires (32) peut être magnétisé par des pôles magnétisés en permanence (12, 42) d'au moins l'un des supports de pôle (10, 40) extérieur et intérieur.

2. Unité d'engrenage selon la revendication 1, **caractérisée en ce que** les pôles intermédiaires (32) transfèrent le champ magnétique des pôles magnétisés en permanence (12, 42) d'au moins l'un des supports de pôle (10, 40) extérieur et intérieur dans un champ magnétique, dans lequel les pôles (12, 42) de l'autre des supports de pôle (10, 40) extérieur et intérieur peuvent être nettement orientés.

3. Unité d'engrenage selon l'une quelconque des revendications précédentes, **caractérisée en ce que** les noyaux polaires (38) des pôles intermédiaires (32) logent dans le support de pôle (30) intermédiaire.

4. Unité d'engrenage selon la revendication 3, **caractérisée en ce que** les noyaux polaires (38) logeant dans le support de pôle (30) intermédiaire sont bloqués par une structure d'appui (172) entourant radialement à l'extérieur le support de pôle (30) intermédiaire.

5. Unité d'engrenage selon la revendication 4, **caractérisée en ce que** la structure d'appui est un bandage d'appui (172) avec des fibres d'appui (174) enroulées de manière circulaire.

6. Unité d'engrenage selon l'une quelconque des revendications précédentes, **caractérisée en ce que** les noyaux polaires (38) des pôles (32) intermédiaires sont fabriqués en un corps magnétisable cohérent.

**7.** Unité d'engrenage selon l'une quelconque des revendications 1 à 5, **caractérisée en ce que** les noyaux polaires (38) sont fabriqués par des paquets (165) de tôles empilées (166).

**8.** Unité d'engrenage selon l'une quelconque des revendications précédentes, **caractérisée en ce que** les bornes (36) extérieures des pôles intermédiaires (32) dans le sens périphérique (22) présentent une extension angulaire autour de l'axe de rotation (20) qui se distingue d'une extension angulaire des bornes (34) intérieures des pôles intermédiaires (32).

**9.** Unité d'engrenage selon l'une quelconque des revendications précédentes, **caractérisée en ce que** les noyaux polaires (38) sont noyés comme des segments dans une masse d'empreinte du support de pôle (30) intermédiaire.

**10.** Unité d'engrenage selon la revendication 9, **caractérisée en ce que** les segments sont appuyés les uns contre les autres par des traverses (158).

**11.** Unité d'engrenage selon la revendication 10, **caractérisée en ce que** les traverses sont des traverses de liaison (170) entre les sections de segment (169) reposant sur des tôles (166) de différents segments.

**12.** Unité d'engrenage selon l'une quelconque des revendications précédentes, **caractérisée en ce que** le support de pôle extérieur (10) présente des bornes (14) extérieures tournées vers le support de pôle (30) intermédiaire et magnétisées en alternance dans un sens périphérique (22) autour de l'axe de rotation (20).

**13.** Unité d'engrenage selon l'une quelconque des revendications précédentes, **caractérisée en ce que** le support de pôle intérieur (40) présente des bornes (44) intérieures tournées vers le support de pôle (30) intermédiaire et magnétisées en alternance dans un sens périphérique (22) autour de l'axe de rotation (20).

**14.** Unité d'engrenage selon l'une quelconque des revendications précédentes, **caractérisée en ce que** le nombre de bornes extérieures (14) se distingue du nombre de bornes intérieures (44).

**15.** Unité d'engrenage selon la revendication 14, **caractérisée en ce que** le nombre de bornes extérieures (14) est plus grand que le nombre de pôles intermédiaires (32).

**16.** Unité d'engrenage selon l'une quelconque des revendications 14 ou 15, **caractérisée en ce que** le nombre de bornes intérieures (44) est plus petit que le nombre de pôles intermédiaires (32).

**17.** Unité d'engrenage selon l'une quelconque des revendications précédentes, **caractérisée en ce que** la différence entre le nombre double des pôles intermédiaires (32) et le nombre des bornes extérieures (14) correspond au nombre de bornes intérieures (44).

**18.** Unité d'engrenage selon l'une quelconque des revendications précédentes, **caractérisée en ce que** les pôles magnétisés en permanence (12, 42) présentent des bornes (14, 44) tournées vers le support de pôle (30) intermédiaire qui présentent dans un sens périphérique (22) autour de l'axe de rotation (20), une polarité (N, S) magnétique variable.

**19.** Unité d'engrenage selon l'une quelconque des revendications précédentes, **caractérisée en ce que** chaque borne (14, 44) des pôles magnétisés en permanence (12, 42) présente une seule polarité magnétique (N, S).

**20.** Unité d'engrenage selon l'une quelconque des revendications précédentes, **caractérisée en ce que** les pôles magnétisés en permanence (12, 42) sont magnétisés par au moins l'un de ces aimants permanents associés (13).

**21.** Unité d'engrenage selon l'une quelconque des revendications précédentes, **caractérisée en ce que** les pôles magnétisés en permanence (12, 42) eux-mêmes sont réalisés en un matériau magnétisé en permanence.

**22.** Unité d'engrenage selon la revendication 21, **caractérisée en ce que** les pôles (12, 42) magnétisés en permanence sont constitués de matériau magnétique dur.

**23.** Unité d'engrenage selon la revendication 21 ou 22, **caractérisée en ce que** les pôles magnétisés en permanence (12, 42) sont formés par des aimants permanents (13, 43) insérés dans le support de pôle (10, 40).

**24.** Unité d'engrenage selon l'une quelconque des revendications 20 à 23, **caractérisée en ce que** le support de pôle (10, 40) présentant les pôles magnétisés en permanence (12, 42) comporte un corps de blindage (16, 46) magnétique, sur lequel logent les pôles (12, 42) magnétisés en permanence.

**25.** Unité d'engrenage selon l'une quelconque des revendications précédentes, **caractérisée en ce que** le support de pôle extérieur (10) présente les pôles magnétisés en permanence.

**26.** Unité d'engrenage selon l'une quelconque des revendications précédentes, **caractérisée en ce que** le support de pôle intérieur (40) présente les pôles magnétisés en permanence.

**27.** Unité d'engrenage selon l'une quelconque des revendications 1 à 25, **caractérisée en ce que** l'un des supports de pôle (10, 40) présente des pôles magnétisés par un enroulement en court-circuit.

**28.** Unité d'engrenage selon l'une quelconque des revendications précédentes, **caractérisée en ce que** les pôles intérieurs (42) s'étendent dans le sens périphérique (22) sur plusieurs des bornes intérieures (34) du support de pôle (30) intermédiaire.

**29.** Unité d'engrenage selon l'une quelconque des revendications précédentes, **caractérisée en ce que** les pôles intérieurs (42) se composent respectivement de plusieurs parties de noyau polaire (200).

**30.** Unité d'engrenage selon l'une quelconque des revendications précédentes, **caractérisée en ce que** les pôles intérieurs (42) sont entourés par une structure d'appui (202) radialement extérieure.

**31.** Unité d'engrenage selon la revendication 30, **caractérisée en ce que** la structure d'appui est un bandage d'appui (202) avec des fibres d'appui enroulées de manière circulaire.

**32.** Unité d'engrenage selon l'une quelconque des revendications précédentes, **caractérisée en ce que** le support de pôle intérieur (40) est en appui rotatif par rapport au support de pôle (30) intermédiaire par le biais d'un palier (194).

**33.** Unité d'engrenage selon l'une quelconque des revendications précédentes, **caractérisée en ce que** le support de pôle (30) intermédiaire de son côté est logé sur deux paliers (142, 150) disposés à distance l'un de l'autre dans le sens de l'axe (146) par rapport à un boîtier d'engrenage (110).

**34.** Unité d'engrenage selon l'une quelconque des revendications précédentes, **caractérisée en ce que** le support de pôle intérieur (40) est logé au moins avec un palier (184) sur un boîtier d'engrenage (110).

**35.** Support d'outil pour un outil entraîné, comprenant un boîtier de support d'outil (110), un arbre d'entraînement (140) logé de manière rotative sur le boîtier de support d'outil (110) avec un élément d'entraînement (130), un arbre de sortie (188) avec un logement d'outil (190) et une unité d'engrenage (210) couplant l'arbre d'entraînement (140) et l'arbre de sortie (188), **caractérisé en ce que** l'unité d'engrenage (100) est réalisée selon l'une quelconque des revendications précédentes.

**Fig. 1**

EP 1 843 454 B1

EP 1 843 454 B1

Fig. 2

17

**Fig. 3**

EP 1 843 454 B1

Fig. 4

# Fig. 5

# Fig. 6

# Fig. 7

EP 1 843 454 B1

Fig. 8

Fig. 9

Fig. 10

EP 1 843 454 B1

**Fig. 11**

30""""

34""""

160

144

172

174

140

EP 1 843 454 B1

EP 1 843 454 B1

**Fig. 12**

25

**EP 1 843 454 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10125464